# EUROPÄISCHE PATENTSCHRIFT

(11) **EP 2 988 913 B1**
(45) Veröffentlichungstag und Bekanntmachung des Hinweises auf die Patenterteilung: **16.08.2017**
(21) Anmeldenummer: 14716550.0
(22) Anmeldetag: 07.04.2014
(51) Int. Cl.: B29C 33/10, B29C 33/44, B29C 45/40, B29C 70/48

(54) **WERKZEUG ZUR HERSTELLUNG EINES VERBUNDSTOFF-BAUTEILS MIT WENIGSTENS EINER ENTLÜFTUNGSBOHRUNG UND DARIN ANGEORDNETEM AUSWERFERSTIFT**
MOULD FOR PRODUCING A COMPOSITE COMPONENT, COMPRISING AT LEAST ONE VENTILATING BORE AND EJECTOR PIN ARRANGED IN THE BORE
MOULE PERMETTANT DE FABRIQUER UN ÉLÉMENT COMPOSITE, POURVU D'AU MOINS UN TROU DE VENTILATION DANS LEQUEL EST DISPOSÉE UNE TIGE D'ÉJECTION

(30) Priorität: 26.04.2013 DE 102013207668
(43) Veröffentlichungstag der Anmeldung: 02.03.2016
(73) Patentinhaber: Bayerische Motoren Werke Aktiengesellschaft, 80809 München (DE)
(72) Erfinder: HEIM, Bernhard, 84032 Landshut (DE); KRULL, Sebastian, 84107 Weihmichl (DE); THEINERT, Joerg, 84051 Ohu (DE)
(86) Internationale Anmeldenummer: PCT/EP2014/056927
(87) Internationale Veröffentlichungsnummer: WO 2014/173671

(56) Entgegenhaltungen:
- WO-A1-2007/070217
- WO-A1-2012/041950
- DE-A1-102011 080 054
- DE-U1- 20 002 110
- US-A- 4 874 308
- US-A1- 2004 022 885
- US-A1- 2006 269 651
- DATABASE WPI Week 199641 Thomson Scientific, London, GB; AN 1996-407248 XP002731443, -& JP H08 197592 A (IKEGAMI KANAGATA KOGYO KK) 6. August 1996 (1996-08-06)
- DATABASE WPI Week 199321 Thomson Scientific, London, GB; AN 1993-172187 XP002731444, -& JP H05 104530 A (MATSUSHITA ELECTRIC WORKS LTD) 27. April 1993 (1993-04-27)
- DATABASE WPI Week 198648 Thomson Scientific, London, GB; AN 1986-316177 XP002731445, -& JP S61 235108 A (DAIICHI KASEI) 20. Oktober 1986 (1986-10-20)
- DATABASE WPI Week 199442, Derwent Publications Ltd., London, GB; AN 1994-337824 & JP H06 262 652 A (JAPAN STEEL WORKS LTD) 20 September 1994
- DATABASE WPI Week 198634, Derwent Publications Ltd., London, GB; AN 1986-221872 & JP S61 152 421 A (FUJITSU FANUC LTD) 11 Juli 1986

## Beschreibung

Die Erfindung betrifft ein Werkzeug zur Herstellung eines Faser-Kunststoff-Verbund-Bauteils, insbesondere zur Herstellung eines kohlenstofffaserverstärkten Kunststoffbauteils, gemäß der im Oberbegriff des Anspruchs 1 näher angegebenen Art.

Ein gängiges Verfahren zur Herstellung eines Faser-Kunststoff-Verbund-Bauteils ist das RTM-Verfahren. Ein Werkzeug zur Durchführung eines RTM-Verfahrens besteht typischerweise aus zwei Werkzeugteilen (Formhälften), welche mit Formbereichen ausgebildet sind, die bei geschlossenem Werkzeug eine Kavität bilden. Bei geöffnetem Werkzeug wird in die Kavität ein Faserausgangsmaterial (Faserhalbzeug) eingelegt. Nach dem Schließen des Werkzeugs wird in der Kavität ein Vakuum erzeugt, indem diese über eine Entlüftungsleitung mit einer Vakuumquelle verbunden wird. Danach wird ein Harzmaterial (Matrixmaterial) in die Kavität eingebracht, welches dann unter Druck und/oder Wärme aushärtet. Zum Entformen des fertigen Bauteils wird das Werkzeug geöffnet und das Bauteil durch Auswerfer aus der Kavität herausgelöst.

In der DE 10 2011 050 976 A1 sind eine Auswerfvorrichtung und ein Werkzeug mit einer Auswerfvorrichtung beschrieben. Zum Stand der Technik wird auch auf die DE 10 2010 052 180 A1, DE 198 13 105 A1 und DE 198 50 462 A1 hingewiesen.

Aus der US 2006/0269651 A1 ist ein Werkzeug bekannt, das ein Werkzeugoberteil, ein Werkzeugunterteil und eine dazwischen befindliche Kavität aufweist und das ferner in Führungsbohrungen angeordnete Auswerferstifte aufweist, wobei entlang der Auswerferstifte Entlüftungsspalte (vent passages) ausgebildet sind, die die Kavität mit einer im Werkzeug vorhandenen Entlüftungsleitung verbinden.

Ein ähnliches Werkzeug, das ebenfalls in den Entlüftungsbohrungen angeordnete Auswerferstifte aufweist, die von einem Entlüftungsspalt umgeben sind, ist aus der US 4,874,308 A bekannt.

Aus der JP-A-6 262 652 ist ein Werkzeug mit einer Entlüftungsbohrung, und eine in die Entlüftungsbohrung mündende Entlüftungsleitung bekannt, wobei ein in die Entlüftungsbohrung längsbeweglicher Stift mit Doppelfunktion, wie im Kennzeichen des anliegenden Anspruchs 1 angegeben, angeordnet ist. Ein anderes gängiges Verfahren zur Herstellung eines Faser- Kunststoff-Verbund-Bauteils ist das Nasspress-Verfahren. Hierzu werden mit Harzmaterial getränkte Faserhalbzeuge in die Kavität eines Presswerkzeugs eingelegt und unter Druck und/oder Wärme ausgehärtet. Zum Entformen des fertigen Bauteils wird das Werkzeug geöffnet und das Bauteil durch Auswerfer aus der Kavität herausgelöst.

Der Erfindung liegt die Aufgabe zugrunde, ein Werkzeug betreffender Art anzugeben, das gegenüber den aus dem Stand der Technik bekannten Werkzeugen wenigstens einen technologischen und/oder wirtschaftlichen Vorteil bietet.

Diese Aufgabe wird gelöst durch ein erfindungsgemäßes Werkzeug mit den Merkmalen des Anspruchs 1. Bevorzugte Weiterbildungen und Ausgestaltungen ergeben sich sowohl aus den abhängigen Ansprüchen als auch aus den nachfolgenden Erläuterungen.

Das erfindungsgemäße Werkzeug umfasst wenigstens ein erstes Werkzeugteil und wenigstens ein zweites Werkzeugteil, die zum Öffnen und Schließen des Werkzeugs relativ zueinander verfahrbar sind und die zur Bildung einer Kavität mit korrespondierenden Formbereichen ausgebildet sind. Wenigstens eines der Werkzeugteile ist in seinem Formbereich (bzw. innerhalb der Kavität) mit wenigstens einer Entlüftungsbohrung ausgebildet und hat eine in die Entlüftungsbohrung mündende Entlüftungsleitung. In der Entlüftungsbohrung ist ein längsbeweglicher Stift (bzw. Bolzen) zum Öffnen und Schließen der in die Entlüftungsbohrung mündenden Entlüftungsleitung angeordnet , wobei dieser Stift gleichfalls auch als Auswerfer zum Entformen eines hergestellten Bauteils ausgebildet ist.

Über die in die Entlüftungsbohrung mündende Entlüftungsleitung kann die Kavität entlüftet und bei Verbinden mit einer Vakuumquelle auch evakuiert werden.

Der längsbeweglich in der Entlüftungsbohrung geführte Stift (bzw. Bolzen) hat somit zumindest eine Doppelfunktion, indem dieser einerseits als Ventilschieber und andererseits als Auswerfer bzw. Auswerferstift benutzbar ist. Das Werkzeug kann somit gegenüber den aus dem Stand der Technik bekannten Werkzeugen einfacher konstruiert und aufgebaut werden. Dadurch können Werkzeuggewicht und Herstellungskosten eingespart werden. Auch der Fertigungsbetrieb mit einem erfindungsgemäßen Werkzeug erweist sich als weniger aufwändig. Erfindungsgemäß ist vorgesehen, dass der Stift in einer in der Entlüftungsbohrung angeordneten Buchse längsbeweglich (bzw. in axialer Richtung) geführt ist. Bei der Buchse kann es sich bspw. um eine metallische Buchse handeln, die in die Entlüftungsbohrung eingeschraubt, eingepresst und/oder eingeklebt ist. Der Stift und die Buchse sind mit einer definierten Passung ausgebildet, um eine störungsfreie Führung und einwandfreie Abdichtung zu gewährleisten.

Der Stift ist an seinem der Kavität zugewandten axialen Ende bevorzugt mit einer planen (d. h. ebenen und glatten) Stirnfläche ausgebildet. Bevorzugt handelt es sich um einen metallischen Stift.

Besonders bevorzugt ist vorgesehen, dass die erfindungsgemäß ausgebildete Entlüftungsbohrung in einem Harzreservoirbereich angeordnet ist, so dass der Stift auch als Nachdrückstift verwendet werden kann, um einen lokalen Kavitätsinnendruck erzeugen zu können. Hierzu wird der Stift definiert, bspw. mit vorgegebener Druckkraft, in die Kavität eingefahren. Nachdrückstifte, mit denen, insbesondere während des Aushärtens, ein lokaler Kavitätsinnendruck (Forminnendruck) erzeugt werden kann, bspw. um Schwindungen in Bauteilbereichen mit Materialanhäufungen zu kompensieren und/oder in kritischen Bauteilbereichen eine bessere Formabbildung zu erhalten, sind als solche aus dem Stand der Technik bekannt.

Das erfindungsgemäße Werkzeug kann eine Vielzahl von Entlüftungsbohrungen und darin angeordneten längsbeweglichen Stiften aufweisen, wobei die Stifte miteinander gekoppelt und synchron (d. h. gleichzeitig) betätigbar sind. Eine Kopplung der Stifte kann bspw. durch eine gemeinsame Betätigungseinrichtung erfolgen.

Alternativ kann vorgesehen sein, dass das erfindungsgemäße Werkzeug eine Vielzahl von Entlüftungsbohrungen und darin angeordneten längsbeweglichen Stiften aufweist, wobei die Stifte unabhängig voneinander und insbesondere einzeln betätigbar sind. Besonders bevorzugt ist vorgesehen, dass jeder Stift einzeln betätigbar ist, wozu jedem Stift eine Betätigungseinrichtung zugeordnet sein kann. Dadurch kann sowohl das Entlüften oder das Evakuieren (Vakuumieren) der Kavität als auch das Entformen des Bauteils an konkrete Erfordernisse angepasst werden, was sowohl die zeitliche Steuerung der Stifte als auch die erzeugten Stellkräfte und Stellbewegungen (Stellwege) umfassen kann. Eine Betätigungseinrichtung kann bspw. ein im Werkzeug verbauter oder außen am Werkzeug angebauter hydraulischer, pneumatischer oder elektromotorischer Antrieb sein.

Das erfindungsgemäße Werkzeug kann ferner auch eine in wenigstens eine Entlüftungsbohrung mündende Füllleitung zum Begasen der Kavität aufweisen. Durch ein über diese Füllleitung in die Kavität eingebrachtes Gas kann ein, gegebenenfalls nur lokal wirksamer, Kavitätsinnendruck erzeugt und/oder ein geschäumtes Bauteil hergestellt werden. Es ist vorgesehen, dass der in dieser Entlüftungsbohrung längsbeweglich angeordnete Stift auch zum Öffnen und Schließen der Füllleitung dient. Besonders bevorzugt ist nur eine Leitung vorgesehen, die wahlweise als Entlüftungsleitung oder als Füllleitung dient.

Bei dem erfindungsgemäßen Werkzeug handelt es sich insbesondere um ein RTM-Werkzeug zur Herstellung eines Faser-Kunststoff-Verbund-Bauteils nach dem RTM-Verfahren, wie eingangs erläutert, wozu dieses Einrichtungen, wie bspw. Einspritzdüsen, umfasst, die bei geschlossenem Werkzeug das Einbringen eines Harzmaterials in die Kavität ermöglichen.

Bei dem erfindungsgemäßen Werkzeug kann es sich auch um ein Nasspresswerkzeug zur Herstellung eines Faser-Kunststoff-Verbund-Bauteils nach dem Nasspress-Verfahren, wie eingangs erläutert, handeln. Ein solches Werkzeug kommt ohne RTM-verfahrensspezifische Einrichtungen aus. Mit einem solchen erfindungsgemäßen Werkzeug können in vorteilhafter Weise aufgrund der möglichen Evakuierung der Kavität auch beim Nasspressen definierte Kavitätsinnendrücke erzeugt werden (was bislang kaum möglich ist), wodurch sich auch mit dem Nasspress-Verfahren Faser-Kunststoff-Verbund-Bauteile mit hoher Bauteilqualität herstellen lassen.

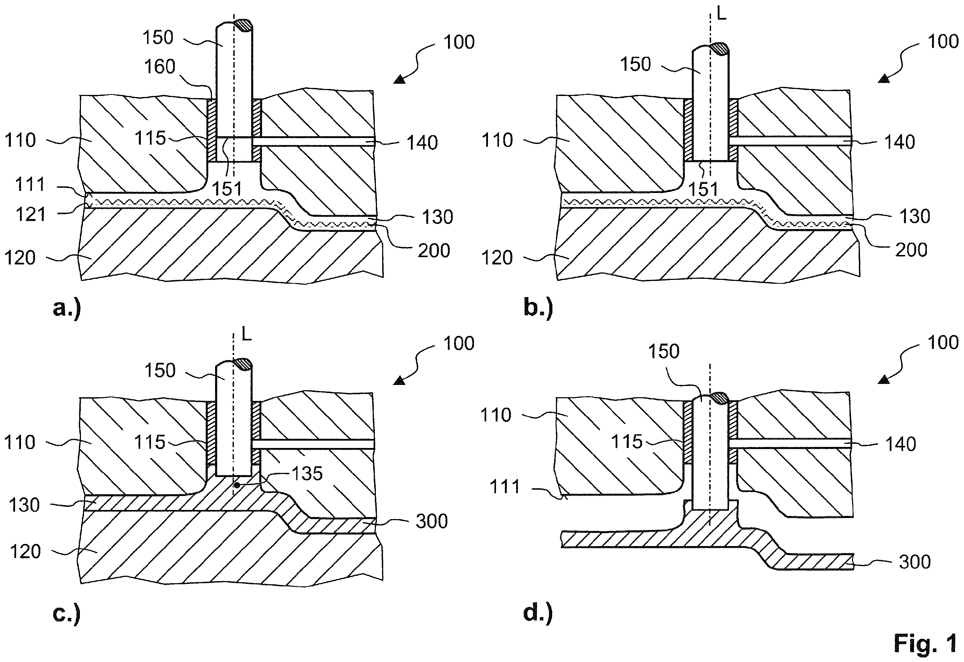

Die Erfindung wird nachfolgend anhand der Zeichnung beispielhaft und in nicht einschränkender Weise näher erläutert. Hierbei können die in der Zeichnung gezeigten und/oder nachfolgend erläuterten Merkmale, unabhängig von konkreten Merkmalskombinationen, allgemeine Merkmale der Erfindung sein. In der Zeichnung zeigt
- Fig. 1: in mehreren schematischen Schnittansichten einen Ausschnitt aus einem erfindungsgemäßen Werkzeug, wobei verschiedene Phasen eines Herstellvorgangs dargestellt sind.

Fig. 1 zeigt schematisch und somit nicht maßstabsgerecht einen Ausschnitt aus einem erfindungsgemäßen Werkzeug 100 zum Herstellen eines Faser-Kunststoff-Verbund-Bauteils. Das Werkzeug 100 umfasst ein Werkzeugunterteil 120 und ein hierzu verfahrbares Werkzeugoberteil 110. Die Werkzeugteile 110 und 120 sind mit korrespondierenden Formbereichen 111 und 121 ausgebildet, die bei geschlossenem Werkzeug, wie dargestellt, eine Kavität 130 bilden. Das Werkzeugoberteil 110 weist an der gezeigten Stelle eine Entlüftungsbohrung 115 auf, in die eine Entlüftungsleitung 140 mündet. Die Entlüftungsleitung 140 ist beispielhaft als im Werkzeugoberteil 110 quergeführte Bohrung ausgebildet.

In der Entlüftungsbohrung 115 ist ein stempelartiger, kreiszylindrischer Stift 150 angeordnet, der längsbeweglich in einer in der Entlüftungsbohrung 115 angeordneten Buchse bzw. Hülse 160 gelagert ist. Die Betätigung des Stifts 150 kann mit Hilfe eines hydraulischen, pneumatischen oder elektromotorischen Antriebs erfolgen. Der Stift 150 ist mit einer planen Stirnfläche 151 ausgebildet.

Durch Längsbewegen des Stifts 150 entlang der Längsachse L kann die Entlüftungsleitung 140 geöffnet und geschlossen werden. Fig. 1a zeigt den geöffneten Zustand, wobei eine Fluidverbindung zwischen der Kavität 130 und der Entlüftungsleitung 140 besteht. Fig. 1b zeigt den geschlossenen Zustand. Der Stift 150 fungiert somit als Ventilschieber. Ferner fungiert der Stift 150 als Nachdrückstift und als Auswerferstift, wie nachfolgend erläutert.

Fig. 1 a zeigt das Werkzeug 100 nach dem Schließen. Mit 200 ist ein in der Kavität 130 eingelegtes Fasermaterial bezeichnet. Der von der Kavität 130 zurückgezogene Stift 150 gibt die Entlüftungsleitung 140 frei, wodurch die Kavität 130 evakuiert werden kann. Ist die Evakuierung abgeschlossen, so wird der Stift 150 in die in Fig. 1 b gezeigte Neutralstellung gebracht, wobei die Stirnfläche 151 des Stifts 150 planparallel mit der Kavitätswandung ist (d. h. die Stirnfläche 151 bildet einen Flächenteil der Kavitätswandung). Anschließend oder gegebenenfalls auch zeitgleich kann in die Kavität 130 ein Harzmaterial eingebracht werden, wozu das Werkzeug 100 nicht dargestellte Einspritzdüsen oder dergleichen aufweist.

Noch bei geschlossenem Werkzeug 100 erfolgt die Aushärtung des in die Kavität eingebrachten Harzmaterials unter Druck- und Wärmeeinwirkung, wobei das Harzmaterial zusammen mit dem Fasermaterial 200 ein Faser-Kunststoff-Verbund-Bauteil 300 bildet. Die Kavität 130 weist an der Entlüftungsbohrung 115 einen als Harzreservoir dienenden Bereich (Harzreservoirbereich) 135 auf, der konstruktiv vorgegeben ist. In der so genannten Nachdruckphase während des Aushärtens kann der Stift 150 mit definierter Druckkraft und/oder mit definiertem Stellweg vorgefahren und hierbei in die Kavität 130 eingefahren werden, wodurch das im Harzreservoir 135 befindliche Harzmaterial gezielt verdrängt wird. Dies ist in Fig. 1c gezeigt.

Nach dem Aushärten wird das Werkzeug 100 geöffnet, so dass das hergestellte Faser-Kunststoff-Verbund-Bauteil 300 entnommen werden kann. Zur Entformung des Bauteils 300 wird der Stift 150 als Auswerferstift betätigt, wozu dieser noch weiter vorgefahren wird. Dies ist in Fig. 1d gezeigt.

Das Werkzeug 100 kann mehrere und insbesondere auch eine große Anzahl derart ausgebildeter Entlüftungsbohrungen 115 mit entsprechend ausgebildeten Stiften 150 aufweisen, die identisch oder unterschiedlich gestaltet sein können. Diese können sowohl im Werkzeugoberteil 110 als auch im Werkzeugunterteil 120 angeordnet sein. Ferner können diese weitgehend frei (d. h. im Wesentlichen nicht an konstruktive Randbedingungen gebunden) und hierbei insbesondere auch gleichmäßig verteilt in den Formbereichen 111 und/oder 121 angeordnet werden.

Die Leitung 140 kann anstatt zur Entlüftung oder Evakuierung der Kavität 130 auch als Füllleitung zur aktiven Begasung der Kavität 130 verwendet werden, wie obenstehend erläutert. Ferner ist denkbar, dass die Leitung 140 sowohl zum Evakuieren als auch zum Begasen der Kavität 130 verwendet wird (Doppelfunktion). In beiden Fällen kann der Stift 150 als Ventilschieber fungieren.

### Bezugszeichenliste

### Werkzeug zur Herstellung eines Faser-Kunststoff-Verbund-Bauteils mit wenigstens einer Entlüftungsbohrung und darin angeordnetem Auswerferstift

- 100: Werkzeug
- 110: Werkzeugoberteil (obere Werkzeughälfte)
- 111: Formbereich
- 115: Entlüftungsbohrung
- 120: Werkzeugunterteil (untere Werkzeughälfte)
- 121: Formbereich
- 130: Kavität
- 135: Harzreservoir
- 140: Leitung
- 150: Stift (Bolzen)
- 151: Stirnfläche
- 160: Buchse
- 200: Fasermaterial
- 300: Bauteil
- L: Längsachse

## Patentansprüche

1. Werkzeug (100) zur Herstellung eines Faser-Kunststoff-Verbund-Bauteils (300), insbesondere zur Herstellung eines kohlenstofffaserverstärkten Kunststoffbauteils, umfassend:
- wenigstens ein erstes Werkzeugteil (110) und wenigstens ein zweites Werkzeugteil (120), die zum Öffnen und Schließen des Werkzeugs (100) relativ zueinander verfahrbar sind und die zur Bildung einer Kavität (130) mit korrespondierenden Formbereichen (111, 121) ausgebildet sind;
- wenigstens eine Entlüftungsbohrung (115), die im Formbereich (111) wenigstens eines der Werkzeugteile (110) ausgebildet ist; und
- eine in die Entlüftungsbohrung (115) mündende Entlüftungsleitung (140); wobei in der Entlüftungsbohrung (115) ein längsbeweglicher Stift (150) mit Doppelfunktion angeordnet ist, der als Ventilschieber zum Öffnen und Schließen der in die Entlüftungsbohrung (115) mündenden Entlüftungsleitung (140) und gleichfalls auch als Auswerfer zum Entformen eines hergestellten Bauteils (300) ausgebildet ist,
**dadurch gekennzeichnet, dass**
in der Entlüftungsbohrung (115) eine Buchse (160) angeordnet ist, in die die Entlüftungsleitung (140) mündet und in der der Stift (150) längsbeweglich geführt ist.

2. Werkzeug (100) nach Anspruch 1,
**dadurch gekennzeichnet, dass**
der Stift (150) an seinem der Kavität zugewandten axialen Ende mit einer planen Stirnfläche (151) ausgebildet ist.

3. Werkzeug (100) nach einem der vorausgehenden Ansprüche,
**dadurch gekennzeichnet, dass**
die Entlüftungsbohrung (115) in einem Harzreservoirbereich (135) angeordnet ist, so dass der Stift (150) auch als Nachdrückstift verwendet werden kann, um einen lokalen Kavitätsinnendruck zu erzeugen.

4. Werkzeug (100) nach einem der vorausgehenden Ansprüche 1 bis 3,
**dadurch gekennzeichnet, dass**
dieses eine Vielzahl von Entlüftungsbohrungen (115) und darin angeordneten längsbeweglichen Stiften (150) aufweist, wobei die Stifte (150) miteinander gekoppelt und synchron betätigbar sind.

5. Werkzeug (100) nach einem der vorausgehenden Ansprüche 1 bis 3,
**dadurch gekennzeichnet, dass**
dieses eine Vielzahl von Entlüftungsbohrungen (115) und darin angeordneten längsbeweglichen Stiften (150) aufweist, wobei die Stifte (150) unabhängig voneinander betätigbar sind.

6. Werkzeug nach Anspruch 5,
**dadurch gekennzeichnet, dass**
jeder Stift (150) einzeln betätigbar ist, wozu jedem der Stifte (150) eine Betätigungseinrichtung zugeordnet ist.

7. Werkzeug (100) nach einem der vorausgehenden Ansprüche,
**dadurch gekennzeichnet, dass**
dieses eine in wenigstens eine Entlüftungsbohrung (115) mündende Füllleitung zum Begasen der Kavität (130) aufweist, wobei der in dieser Entlüftungsbohrung (115) längsbeweglich angeordnete Stift (150) ebenfalls zum Öffnen und Schließen der Füllleitung ausgebildet ist.

8. Werkzeug (100) nach einem der vorausgehenden Ansprüche 1 bis 7,
**dadurch gekennzeichnet, dass**
es sich um ein RTM-Werkzeug handelt.

9. Werkzeug (100) nach einem der vorausgehenden Ansprüche 1 bis 7,
**dadurch gekennzeichnet, dass**
es sich um ein Nasspresswerkzeug handelt.

## Claims

1. A mould (100) for producing a fibre-reinforced plastics material component (300), especially for producing a carbon fibre reinforced plastics material component, comprising:
- at least a first mould part (110) and at least a second mould part (120) which are movable relative to each other for opening and closing the mould (100) and which are formed with corresponding moulding regions (111, 121) to form a cavity (130);
- at least one ventilation bore (115) which is formed in the moulding region (111) of at least one of the mould parts (110); and
- a ventilation line (140) opening into the ventilation bore (115); wherein a longitudinally mobile dual-function pin (150) is arranged in the ventilation bore (115), which pin is formed as a valve slider for opening and closing the ventilation line (140) which opens into the ventilation bore (115) and at the same time is also formed as an ejector for demoulding a component (300) which is produced,
**characterised in that**
a bush (160) is arranged in the ventilation bore (115), into which bush the ventilation line (140) opens and in which the pin (150) is guided in longitudinally mobile manner.

2. A mould (100) according to Claim 1,
**characterised in that**
the pin (150) is formed with a planar end face (151) on its axial end facing the cavity.

3. A mould (100) according to one of the preceding claims,
**characterised in that**
the ventilation bore (115) is arranged in a resin reservoir region (135), so that the pin (150) can also be used as a holding-pressure pin, in order to generate a local internal cavity pressure.

4. A mould (100) according to one of the preceding Claims 1 to 3,
**characterised in that**
it has a plurality of ventilation bores (115) and longitudinally mobile pins (150) arranged therein, the pins (150) being coupled together and being able to be actuated synchronously.

5. A mould (100) according to one of the preceding Claims 1 to 3,
**characterised in that**
it has a plurality of ventilation bores (115) and longitudinally mobile pins (150) arranged therein, the pins (150) being able to be actuated independently of each other.

6. A mould according to Claim 5,
**characterised in that**
each pin (150) can be actuated individually, for which purpose an actuating means is associated with each of the pins (150).

7. A mould (100) according to one of the preceding claims,
**characterised in that**
it has a filling line opening into at least one ventilation bore (115) for supplying gas to the cavity (130), with the pin (150) arranged in longitudinally mobile manner in this ventilation bore (115) likewise being formed for opening and closing the filling line.

8. A mould (100) according to one of the preceding Claims 1 to 7,
**characterised in that**
it is an RTM mould.

9. A mould (100) according to one of the preceding Claims 1 to 7,
**characterised in that**
it is a wet pressing mould.

## Revendications

1. Outil (100) de fabrication d'une pièce composite matériau synthétique-fibres (300), en particulier de fabrication d'une pièce en un matériau synthétique renforcé par des fibres de carbone comprenant :
- au moins une première partie d'outil (110) et au moins une seconde partie d'outil (120) pouvant être déplacées relativement l'une à l'autre pour permettre d'ouvrir et de fermer l'outil (100), et qui sont réalisées pour permettre de former une cavité (130) ayant des zones de mise en forme (111, 121) correspondantes,
- au moins un perçage de ventilation (115) qui est réalisé dans la zone de mise en forme (111) d'au moins l'une des parties d'outil (110), et
- une conduite de ventilation (140) débouchant dans le perçage de ventilation (115),
- dans le perçage de ventilation (115) étant montée une tige (150) mobile longitudinalement ayant une double fonction, qui est réalisée sous la forme d'un tiroir de soupape pour permettre d'ouvrir et de fermer la conduite de ventilation (140) débouchant dans le perçage de ventilation (115) et simultanément également sous la forme d'un éjecteur pour permettre de démouler une pièce fabriquée (300),
**caractérisé en ce que**
dans le perçage de ventilation (115) est montée une douille (160) dans laquelle débouche la conduite de ventilation (140) et dans laquelle la tige (150) est guidée en coulissement longitudinal.

2. Outil (100) conforme à la revendication 1,
**caractérisé en ce que**
la tige (150) est réalisée à son extrémité axiale tournée vers la cavité avec une surface frontale plane (151).

3. Outil (100) conforme à l'une des revendications précédentes,
**caractérisé en ce que**
le perçage de ventilation (115) est monté dans une zone réservoir de résine (135) de sorte que la tige (150) puisse également être utilisée en tant que tige de maintien en pression pour produire une pression interne locale dans la cavité.

4. Outil (100) conforme à l'une des revendications précédentes 1 à 3,
**caractérisé en ce qu'**
il comporte un ensemble de perçages de ventilation (115) et un ensemble de tiges (150) mobile longitudinalement montées dans ces perçages, les tiges (150) étant accouplées les unes aux autres et pouvant être actionnées en synchronisme.

5. Outil (100) conforme à l'une des revendications précédentes 1 à 3,
**caractérisé en ce qu'**
il comporte un ensemble de perçages de ventilation (115) et un ensemble de tiges (150) mobiles longitudinalement dans ces perçages, les tiges (150) pouvant être actionnées indépendamment les unes des autres.

6. Outil conforme à la revendication 5,
**caractérisé en ce que**
chaque tige (150) peut être actionnée indépendamment, et à cet effet, à chacune des tiges (150) est associé un dispositif d'actionnement.

7. Outil (100) conforme à l'une des revendications précédentes,
**caractérisé en ce qu'**
il comporte une conduite de remplissage débouchant dans au moins un perçage de ventilation (115) pour permettre l'alimentation en gaz de la cavité (130), la tige (150) montée mobile longitudinalement dans ce perçage de ventilation (115) étant réalisée pour permettre également d'ouvrir et de fermer la conduite de remplissage.

8. Outil (100) conforme à l'une des revendications précédentes 1 à 7,
**caractérisé en ce qu'**
il est constitué par un outil RTM.

9. Outil (100) conforme à l'une quelconque des revendications 1 à 7,
**caractérisé en ce qu'**
il est constitué par un outil de pressage humide.
